# EUROPEAN PATENT APPLICATION

(11) **EP 1 217 161 A2**
(43) Date of publication of application: **26.06.2002**
(21) Application number: 01129192.9
(22) Date of filing: 10.12.2001
(51) Int. Cl.: E05F 15/18, H02K 41/02

(54) **Door suspension assembly**

(30) Priority: 22.12.2000 EP 00811229
(71) Applicant: INVENTIO AG, CH-6052 Hergiswil (CH)
(72) Inventor: Zhou, Tian, 6014 Littau (CH); Rennetaud, Jean-Marie, Chester, NJ 07930 (US)

(57) **Abstract**

The door suspension assembly comprises a ferromagnetic flat plate (**2**) horizontally attached to a support rail (**1**) intended to be attached to a door frame above a doorway or entrance portal. Two supporting blocks (**7, 7'**) are provided having openings, in which cylindrical bearings with an axial hole are located in which a hollow tube (**5**) is introduced. Said supporting blocks (**7, 7'**) are provided for supporting a door panel (**12**). Three connectors (**3, 4, 6**) are located in a fixed position relative to the flat plate (**2**). Said connectors support small portions of said hollow tube (**5**), which extends the same length as a required door travel. A magnet array (**17**) is supported by a plate (**14**) connected to said supporting blocks (**7, 7'**), wherein there is a small magnetic gap between the magnet array (**17**) and the flat plate (**2**), such that the magnet array (**17**) generates a magnetic force attracting the plate (**2**) and lifting thus the supporting blocks (**7, 7'**) which support said door or door panel (**12**). The door suspension assembly comprises also a primary (**15**) of a motor attached to said supporting blocks (**7, 7'**) and a secondary located in the interior of the hollow tube (**5**).

## Description

The present invention relates to a door suspension assembly as defined in claim **1.**

The European patent application **No. 0 841 286 A1** discloses an elevator car door suspension assembly for opening and closing elevator car doors including a linear induction motor having a pair of movable motor primaries attached to a respective door hanger of each door and a stationary motor secondary attached to a header bracket which is secured to the elevator car, and wherein said motor secondary comprises a substantially flat plate which is vertically disposed and is preferably made of a conductive metal as copper. In this system, in which the door panels are guided by separate rails, a pair of flexible ropes and wheels are needed to keep both panels be moving synchronously.

Another design is a driving apparatus for doors such as disclosed in **U.S.** Patent **No. 5,172,518** (Yoshino). Said driving apparatus for doors comprises a door-like driven body, a conductive rail having an inverted T-shaped configuration serving as a secondary member of a linear motor, two travelling bodies being supported upon a base portion of the conductive rail by means of first rollers, a primary coil of said linear motor and second rollers disposed upon side surfaces of said unit travelling bodies.

A drawback with the elevator car door suspension assemblies of said types results in instability problems and in that it raises the installation and maintenance cost.

Therefore, the object of the present invention is to provide an improved door suspension assembly.

The door suspension assembly of the invention is characterized by what is said in claim **1**. Other embodiments of the invention are characterized by the features presented in the other claims.

One of the advantages of a door suspension assembly according to the invention, is that it can be easily and inexpensively manufactured and easily and quickly installed.

Other characteristics and advantages of the present invention will become apparent on reading the description made hereafter with reference to the accompanying drawings, given solely by way of example, wherein:
**FIG. 1** is a simplified view of two door panels with a door suspension assembly for an elevator car according to the invention;
**FIG. 2** is a schematic front view of said door suspension assembly;
**FIG. 3** is a side view of one embodiment of the invention;
**FIG. 4** is a side view of a second embodiment of the invention;
**FIG. 5** is a simplified perspective view of a bearing for said assembly;
**FIG. 6** illustrates a detail of the secondary of a motor for said assembly;
**FIG. 7A** is a schematic top view of a door suspension assembly; and
**FIG. 7B** is a schematic front view of the door suspension assembly of **FIG. 7A.**

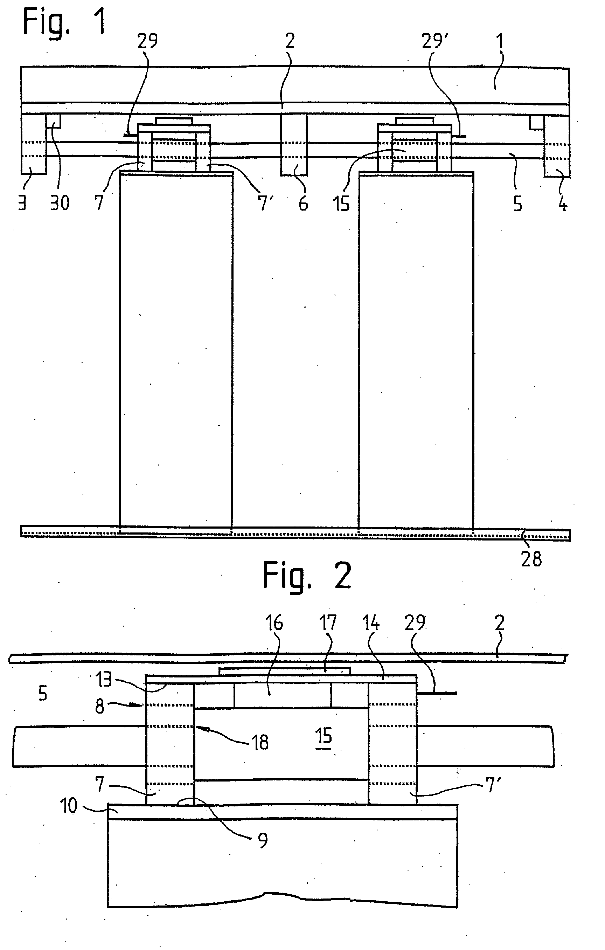

The door suspension assembly according to **FIG. 1** comprises a support means or rail support **1,** intended to be attached to a crosspiece of a door frame above the doorway or entrance portal. The system may be applied to doors, windows, opening portions as doorways of industrial buildings, houses, elevator cars, vehicles and the like. Preferably, the rail support **1** has an **I -** or **L-** or **T-** profile.

The rail support **1** comprises or supports a substantially flat ferromagnetic plate **2** having a horizontally disposed main surface. Attached to the rail support **1** there are two connectors **3, 4** supporting the end portions of a rail **5** which preferably is substantially cylindrical shaped having the form of a hollow tube, e.g. made of non-magnetic stainless steel. The tube **5** and/or the flat plate **2** extend at least approximately the length of the door or have approximately the same length as the required door travel. A further connector **6** may be provided for holding the center of the tube **5.**

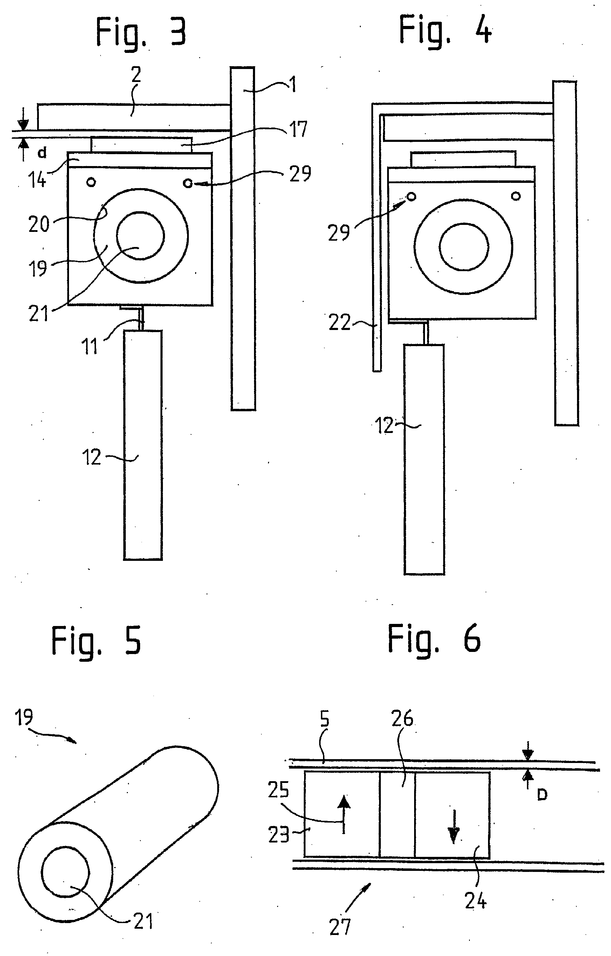

As shown in **FIGS. 2** to **4,** the door suspension assembly includes two pairs of supporting blocks or guide means **7, 7'.** Each block **7, 7'** has a recess or opening **8,** in which the tube **5** is introduced. Attached to the outer lower or bottom surface **9** of the supporting block **7** is a first or lower strip **10** with connection means **11 (FIG. 3)** from which a door or door panel **12** is suspended as seen in the figures. Said connection means preferably include screws or other types of fastener.

The outer upper surface **13** of the supporting block **7** is attached to an end area of a second or upper plate **14** whereas the supporting block **7'** is attached to the other end area of said upper plate **14.** A primary **15** of a linear motor is attached to the upper plate **14** via connecting means **16.** As usual, said motor primary **15** includes a cylindrical type of winding. Preferably, said primary is placed in the space between the blocks **7** and **7'.** The secondary of said linear motor is accommodated in the interior of the hollow tube **5.**

A magnet array **17** is also attached to said second plate **14** but over it. Such a magnetic array **17** may include rare earth permanent magnets, such as neodymium-iron-boron (**NdFeB**), cobalt, samarium or cheap hard permanent ferrite magnets disposed with alternating magnetic polarities. Accordingly, the door suspension assembly comprises a magnetic unity consisting of the supporting blocks **7, 7',** the strips **10, 14** and the motor primary **15** and the magnet array **17** attached to the plate **14.** Naturally, the primary **15** has also an opening **18** (**FIG. 2**) which is coaxial with the openings **8** of the blocks **7, 7',** so that the tube **5** can traverse all said openings.

Accommodated in the opening **8** of each supporting block **7** there is a bearing or bushing **19,** like a linear plain bushing or a linear ball bushing, located in the air gap of the support block **7** between the tube **5** and the inner border **20** (**FIG. 3**) of the opening **8** (**FIG. 2**). As seen in **FIGS. 3, 4** and **5** the bushing **19** is substantially a cylindrical ringshaped body with a hole **21** for the tube **5.** Preferably, the bushing is a guide made from a sliding synthetic material, for example Igus with IglidurJ plastic material or Thomson Fluoronyliner, or a linear ball bushing, for example Thomson SuperSmart.

The magnet array **17** generates a magnetic force lifting the plate **14** and hence the attached blocks **7, 7'** supporting the door **12.** The magnet array **17** is foreseen to cancel the most of the weight of the door panel **12.** Said passive magnetic suspension of the door **12** reduces dramatically the radial force applied to the bearings **19,** as well as the overall friction in the system and the maximum required force of the motor. The magnetic attraction force between the magnet array **17** and the plate **2** is independent of the action of the tubular linear motor, i.e. with or without currents. It means that the passive magnetic suspension allows the door **12** to open faster, noiseless and maintenance-free, the motor and an additional converter to be smaller in size and the life of the linear bearings **19** to increase due to the load reduction. When the motor is active, the bushings **19** slide along the tube **5.** Said bearings **19** guide the primary **15** sliding along the tube **5** in case that the door weight is not fully suspended by the magnetic force.

In the embodiment according to **FIG. 4** the door panel **12** is suspended with a small eccentricity relative to the axis of the hollow tube **5**. An L-shaped sheet **22** of a synthetic material or metal covers the front of the blocks **7, 7',** the primary **15** and the magnet array **17** for aesthetic purposes.

The rail support **1** preferably supports both the fixed ferromagnetic plate **2** and the fixed tube **5.** As seen in **FIG. 1** and **2,** the linear motor primary **15** is attached to the door or panel door **12** via the connecting means **16,** the plate **14,** the blocks **7, 7'** and the strip **10.** Thus the door **12** will be moved together with said primary **15.** Between the magnet array **17** and the plate **2** there is a small magnetic gap **d** (**FIG. 3**), e.g. of 1 to **2.5** mm.

Due to the relatively high attraction between the magnet array **17** and the flat plate **2** it is convenient to use a rigid rail support **1** so that no deflection and change in the air gap **d** dimension can occur. This requirement is fulfilled by the hollow tube **5** and the high stiffness of the flat plate **2.**

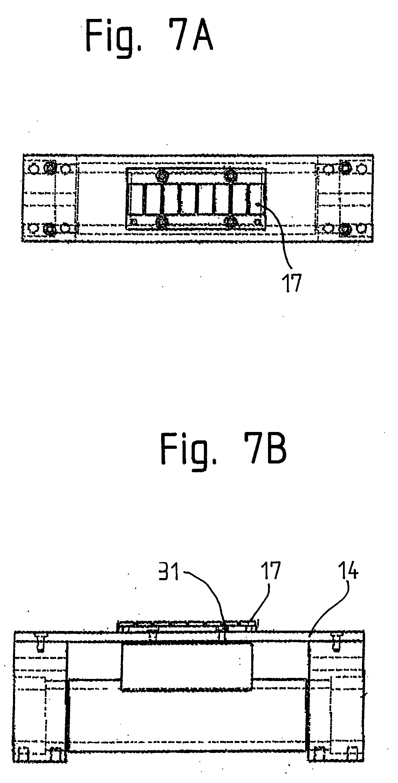

The individual magnets of the array **17** may be disposed with alternating polarity on a carrier as shown in **FIGs. 7A** and **7B.** The carrier may be a back iron **31.** The array **17** may comprise segments (not shown) intermediate to inset-mounted individual permanent magnets, i.e. each sequence of magnetic elements comprises a flat permanent magnet e.g. with the N polarity above, an optional intermediate magnetic element, a flat permanent magnet with the S polarity above and an optional intermediate magnetic element. The width of the intermediate segments may be smaller than that of the individual permanent magnets. Preferably, the back iron is formed from a soft magnetic material such as mild steel, preferably having a relative high permeability **µ**_{**r**} **>> 1.** The intermediate magnetic elements may be flat elements of mild iron or steel, plates of ferrite, preferably but not exclusively soft ferrite. The individual permanent magnets and/or other optional intermediate elements may be glued to the back iron **31.** As illustrated in **FIG. 6** and FIG **7B,** the array **17** may be supported by a non-magnetic plate **14.** The non-magnetic plate **14** may comprise aluminium or stainless steel, for example.

The secondary of said linear motor comprises a plurality of ring type permanent magnets like the magnets **23, 24** of **FIG. 6** which are accommodated in the interior of the hollow tube **5.** Between each pair of magnets **23, 24,** which preferably have a diametrically enhanced anisotropic direction of magnetization **25,** other cylindrical pieces **26** of non-magnetic material and/or soft iron may be located. Note that for rod magnets the direction of magnetization would point to the right for the magnet **23** and to the left for the magnet **24.** The actual sense of magnetization of said ring or rod magnets depends of the type of motor used. The motor primary **15** and the motor secondary **27,** which are separated by an air gap, produce the thrust to drive the door panel **12.** This air gap is substantially the wall's thickness **D** of the hollow tube **5.** As usual, the primary may be supplied with electrical currents from an electronic controller which also controls the speed of the motor. Because of the tubular linear motor configuration, the normal force between the motor primary and the motor secondary is very well balanced. There is no additional guidance, such as roller, for the door panel as required by a conventional linear motor door. However, a lower guiding joint **28** (**FIG. 1**) for the door or door panel **12** may also be used.

The position control of the door suspension assembly according to the invention may be achieved by sensors comprising a moving element **29, 29'** and a quiescent device **30** (**FIG. 1**) arranged according to the prior art or by any other standard positioning system.

The tubular linear motor is typically a permanent magnet tubular linear synchronous motor **(PM-TLSM**) according to the prior art. As an example, the linear motor elevator door will be based on a center-opening door system, and be driven by two **PM-TLSMs** separately. Therefore, the motor lift door will operate in a very simple mechanical structure. However, the tubular motor can also be replaced by other types of motor, such as **FLIMs/TLIMs** or **FLRMs/TLRMs** etc. (wherein **F** means flat, **T** tubular, **L** linear, **I** inductance, **R** reluctance and **M** motor).

The tube **5** should be mounted on the assemblies prior that it will be fixed by means of the connectors **3, 4** and **6.** However, in an other embodiment of the invention the guide means **7, 7'** and/or the bearing **19** may also have an opening instead of a hole **21.**

A simplified embodiment of the invention includes only the disclosed magnetic suspension, so that it can be fitted to the elevator hoistway door. This means that the motor primary can be replaced by a non-magnetic mechanical support with two linear guides, and the motor secondary can be replaced by any tube or rod or rail without magnets inside.

If the guide means **7, 7'** are made from a sliding synthetic material, for example said Igus with IglidurJ plastic material, said bearings **19** may be avoided, and in this case the diameter of the opening **8** should be smaller, specifically, it must fit the tube or other equivalent element **5.** Generally speaking, said guide means may include or not said bearing **19.**

Other advantages of the system according to the present invention are that a high reliability can be achieved due to the great reduction in the number of parts in comparison with the prior art systems and the use of nearly maintenance-free components; the volume of the motor and the inverter can also be reduced; extra heat generated in the primary can be avoided; no special bearings are needed to keep the motor air gap constant, avoiding so stability and maintenance problems; and additional flexible ropes and wheels are not needed.

### Glossary

support means or rail support **1**
flat ferromagnetic plate **2**
connectors **3, 4**
rail **5** or hollow tube
connector **6**
supporting blocks or guide means **7, 7'**
recess or opening **8**
lower bottom surface **9**
lower strip **10**
connection means **11**
door or door panel **12**
upper surface **13**
upper (non-magnetic) plate **14**
primary **15**
connecting means **16**
magnet array **17**
opening **18**
bearing or bushing **19**
inner border **20**
hole **21**
L-shaped sheet **22**
magnets **23, 24**
direction of magnetization **25**
cylindrical pieces **26**
motor secondary **27**
lower guiding joint **28**
sensor moving elements **29, 29'**
sensor quiescent device **30**

## Claims

1. A door suspension assembly comprising:
a substantially flat ferromagnetic plate (**2**), preferably having a horizontally disposed plain surface, attached to at least one support (**1**) intended to be attached to a door frame above a doorway or entrance portal;
at least one guide means (**7; 7'**) having an opening (**8**), in which a rail or rod (**5**) is introduced, wherein said guide means (**7; 7'**) is intended for supporting a door or door panel (**12**);
at least two connectors (**3, 4**) located in a fixed position relative to the flat plate (**2**) and supporting small portions of said rail or rod (**5**), which extends at least approximately the same length as a required door travel;
a magnet means (**17**) attached to said guide means (**7; 7'**), wherein there is a small magnetic gap (**d**) between the magnet means (**17**) and the flat plate (**2**), such that the magnet means (**17**) generates a magnetic force lifting the guide means (**7; 7'**) supporting said door or door panel (**12**).

2. The door suspension assembly according to claim **1,** further comprising a bearing (**19**) of substantially cylindrical shape with an axial hole (**21**), wherein said bearing is mounted in said opening (**8**) of the guide means (**7; 7'**) and wherein said rail or rod (**5**) is introduced in said axial hole (**8**).

3. The door suspension assembly according to claim **1** or **2,** wherein said guide means include two supporting blocks (**7,** **7'**) which have bottom surfaces (**9**) attached to a lower strip (**10**) having connection means (**11**) from which said door or door panel (**12**) is suspended, and wherein said supporting blocks (**7, 7'**) have upper surfaces (**13**) attached to an upper strip (**14**), and wherein said magnet means (**17**) is attached to said upper strip (**14**).

4. The door suspension assembly according to one of the claims **1** to **3,** wherein said rail or rod is a hollow tube (**5; 27**).

5. The door suspension assembly according to claim **4,** wherein said hollow tube (**27**) is made of a non-magnetic material and said guide means (**7; 7'**) include a motor primary, which has a motor secondary (**23, 24, 26**) located in the interior of said hollow tube (**27**).

6. The door suspension assembly according to claim **5,** wherein said motor primary (**15**) is located between two supporting blocks (**7, 7'**).

7. The door suspension assembly according to one of the claims **1** to **6, characterized in that** the magnet means (**17**) comprises neodymium rare earth permanent magnets or ferrite permanent magnets.

8. The door suspension assembly according to one of the claims **1** to **7, characterized in that** it is formed as a suspension of a door or door panel (**12**) for a lift installation.

9. The door suspension assembly according to one of the claims **1** to **8, characterized in that** said support means for the plate (**2**) is an elongated rail support (**1**) attachable to a crosspiece of a door frame.

10. The door suspension assembly according to one of the claims **2** to **9, characterized in that** said bearing (**19**) is made of a sliding synthetic material.
